# NEUE EUROPÄISCHE PATENTSCHRIFT

(11) **EP 0 670 957 B2**
(45) Veröffentlichungstag und Bekanntmachung des Hinweises auf die Entscheidung über den Einspruch: **04.04.2001**
(45) Hinweis auf die Patenterteilung: 24.07.1996
(21) Anmeldenummer: 94901812.1
(22) Anmeldetag: 17.11.1993
(51) Int. Cl.: F02C 1/00, F17D 1/075

(54) **ERDGAS-EXPANSIONSANLAGE**
NATURAL GAS EXPANSION PLANT
SYSTEME DE DETENTE DE GAZ NATUREL

(30) Priorität: 18.11.1992 DE 9215695 U
(43) Veröffentlichungstag der Anmeldung: 13.09.1995
(73) Patentinhaber: ENERGIEVERSORGUNG LEVERKUSEN GMBH, D-51371 Leverkusen (DE); PILLER-GmbH, 37520 Osterode am Harz (DE)
(72) Erfinder: KÜCK, Elmar, D-50181 Bedburg (DE); SIEFEN, Heinz, D-51375 Leverkusen (DE); CANDERS, Wolf-Ruediger, D-37520 Osterode (DE)
(74) Vertreter: Selting, Günther, Dipl.-Ing.
(86) Internationale Anmeldenummer: EP9303223
(87) Internationale Veröffentlichungsnummer: WO9411626

(56) Entgegenhaltungen:
- EP-A- 0 004 398
- EP-A- 0 453 007
- DE-A- 2 515 315
- US-A- 4 555 637
- US-A- 4 693 072
- BWK BRENNSTOFF WARME KRAFT Bd. 35, Nr. 10 , 1. Oktober 1983 , DUSSELDORF DE Seiten 428 - 432 G.GNEUSS 'Nutzung von Druckenergie durch Gasexpansionsmotoren'
- A.MIRANDOLA AND L.MINCA 'Energy recovery by expansion of high pressure natural gas' , AMERICAN CHEMICAL SOCIETY , SAN DIEGO 21st Intersociety Energy Conversion Engineering Conference siehe Seite 16 - Seite 21; Abbildung 2
- COMPRESSED AIR Bd. 90, Nr. 4 , 1. April 1985 , PHILLIPSBURG US Seiten 30 - 33 'Suspending Rotating Shafts in Midair'
- CRYOGENICS Bd. 17, Nr. 7 , 1. Juli 1977 , GUILDFORD GB 'Magnetic Auxilliary Bearing for SULZER Gas Bearing Turbines'
- Broschüre der Arbeitsgemeinschaft für sparsamen und umweltfreundlichen Energieverbrauch e.V., "Stichwort Entspannung Strom aus Gasdruck", April 1991
- Praxis Kraft-Wärme-Kopplung, Band 3, Jobst Klien, "Planungshilfe Blockheizkraftwerke", Verlag C.F. Müller, 1. Auflage 1991, Seiten 14 und 16
- Schriftreihe gwf Gas. Erdgas, Band 6, "Wirtschaftliche Nutzung des Druckgefälles bei der Entspannung von Erdgas", R.Oldenburg Verlag München Wien 1991, Herausgeber: Rolf Hüning

## Beschreibung

Die Erfindung betrifft eine Erdgas-Expansionsanlage zum Entspannen von Erdgas, das unter hohem Druck geliefert wird und mit niedrigerem Druck in ein zu den Endverbrauchem führendes Verteilernetz eingespeist werden soll.

In Fernleitungen steht Erdgas unter einem relativ hohen Druck von etwa 55 bar, während im Verbrauchernetz ein niedrigerer Druck von z.B. 9 bar herrscht. Am Übergang von dem Fernleitungsnetz zum Verteilemetz sind Erdgas-Expansionsanlagen erforderlich, in denen eine Druckreduzierung erfolgt. Bei der Druckreduzierung wird Energie frei, die zur Stromerzeugung genutzt werden kann. Es ist bekannt, in Erdgas-Expansionsanlagen Kolben-Expansionsmaschinen einzusetzen, die als volumetrische Verdrängermaschinen arbeiten, und damit einen Generator zu treiben. Ferner sind auch Expansionsanlagen bekannt, die mit Expansionsturbinen arbeiten. Bei diesen Anlagen wird Öl als Lagerschmierung eingesetzt. Da das Erdgas sich bei der Expansion abkühlt, erfolgt vor der Expansion eine Erwärmung des Erdgases in dem Maße, daß die Abkühlung nicht unter den kritischen Bereich von 0 °C erfolgt. Diese Forderung macht die Anlage gegenüber Feuchtigkeit im Erdgas unempfindlich. Für die Erwärmung muß Wärmeenergie bereitgestellt werden. Die Erzeugung dieser Wärme erfolgt normalerweise unter Verwendung von Heizkesselanlagen.

Aus EP-A-0 004 398 ist eine Gasentspannungsanlage bekannt, die ein Kraftwerk aufweist, welches aus einem Motor und einem Stromgenerator besteht. Die Abwärme des Motors wird einem Wärmetauscher zugeführt, der das zu einer Entspannungsturbine strömende Gas vorwärmt. Hierbei kann die Wärmemenge, die an das Gas abgegeben wird, nicht verändert werden, ohne den Vollastbetrieb des Motors aufzugeben.

Aus dem Buch "Praxis Kraft-Wärme-Kopplung", Verlag C.F. Müller, Karlsruhe, Band 3, Jobst Klien: Planungshilfe Blockheizkraftwerke, 1. Aufl. 1991, ist es bekannt, die Blockheizkraftwerke einer Gruppe in Abhängigkeit von dem Bedarf kaskadenartig zuzuschalten, da der Teillastbetrieb wegen stark sinkender elektrischer Wirkungsgrade und Lebensdauerverkürzung meist unwirtschaftlich ist.

Der Erfindung liegt die Aufgabe zugrunde, eine Erdgas-Expansionsanlage zu schaffen, die unabhängig von dem momentanen Bedarf an entspanntem Erdgas ständig mit hohem Wirkungsgrad bzw. guter Energieausnutzung arbeitet.

Die Lösung dieser Aufgabe erfolgt erfindungsgemäß mit den im Anspruch 1 angegebenen Merkmalen.

Nach der Erfindung wird die dem dem Turbogenerator vorgeschalteten Wärmetauscher zugeführte Energie von mindestens einem Blockheizkraftwerk aufgebracht, das einen Gas-Verbrennungsmotor und einen Generator zur Stromerzeugung aufweist. Für die Vorwärmung des Erdgases wird die Abwärme des Blockheizkraftwerks ausgenutzt, das im Vollastbetrieb gefahren wird. Ein Blockheizkraftwerk hat im Vollastbetrieb den größten Wirkungsgrad, während sich bei Teillast der Wirkungsgrad erheblich verringert. Nach der Erfindung wird das Blockheizkraftwerk entweder im Vollastbetrieb betrieben oder abgeschaltet, je nach Anforderung des Erdgasnetzes. Es wird also stets mit hohem Wirkungsgrad gearbeitet, wobei der Generator des Blockheizkraftwerks elektrische Energie erzeugt, die in das Elektrizitätsnetz eingespeist werden kann. An kalten Wintertagen, an denen der Bedarf an Erdgas groß ist, erzeugen die Blockheizkraftwerke, ebenfalls viel Strom, was zur Deckung des dann auch erhöhten Strombedarfs beiträgt.

Nach der Erfindung wird die Wärme, die dem Erdgas vor seiner Expansion zugeführt wird, durch jeweils begrenzte relativ kleine Einheiten, nämlich die Blockheizkraftwerke, erzeugt, die darüber hinaus einen Teil der ihnen zugeführten Energie in Form elektrischen Stromes abgeben. Diese Stromerzeugung fällt gewissermaßen als Nebenprodukt ab, ist aber erwünscht, weil sie dann anfällt, wenn der Strombedarf besonders groß ist.

Ein radial hochanfallendes Turbinenrad ist direkt an dem freien Wellenende eines druckfest gekapselten, magnetgelagerten Mittelfrequenzgenerators befestigt.

Der magnetgelagerte Generator arbeitet ohne jegliche Schmiermittel in den Lagern. Eine Verschmutzung des Erdgases durch Öl ist also überhaupt nicht möglich. Die Verluste in den Magnetlagern sind mindestens um eine Zehnerpotenz niedriger als bei den bekannten ölgeschmierten Lagern. Das druckfest gekapselte Gehäuse sorgt dafür, daß kein Erdgas aus der Generator-Turbineneinheit entweichen kann.

Durch den Verzicht auf Gleitlager und Wälzlager sowie den Verzicht auf Wellendichtungen und Schmiermittel wird sichergestellt, daß keine Fremdstoffe in die Gasleitung eindringen und das Gas verunreinigen können.

Vorzugsweise erfolgt die Temperaturerhöhung des Erdgases durch die Wärmetauscher auf eine Temperatur unter 100 °C, um in den Blockheizkraftwerken Gasmotoren zu verwenden, die mit Kühlwasser unter 100 °C arbeiten. Andererseits ergibt das Enthalpie-Entropie-Diagramm für Erdgas, daß bei so niedrigen Vorwärmtemperaturen nur Druckverhältnisse bis ca. 2 - 3,5 mit sehr gutem Wirkungsgrad einstufig abzubauen sind. Überschreitet das vorhandene Druckgefälle diese Verhältnisse, so sind, guten Wirkungsgrad vorausgesetzt, deutlich höhere Vorwärmtemperaturen erforderlich.

Beschränkt man sich auf Vorwärmtemperaturen unter 100 °C, bietet sich eine mehrstufige Entspannung mit Zwischenerwärmung an.

Eine Entspannungsmaschine, die einstufig mit hervorragendem Wirkungsgrad Druckverhältnisse um 3 abbauen kann, ist die in der Erfindung verwendete, radial angeströmte Zentripetalturbine, eine Art Francis-Turbine für kompressible Medien. Volumenstrom und Leistung werden über verstellbare Leitschaufeln kontrolliert. Durch den Leitschaufelmechanismus bedingt hat diese Turbine auch im Teillastbereich, im Gegensatz zu vielen anderen Turbinen, einen hervorragenden Wirkungsgrad.

Die im Generatorpaket anfallende Verlustwärme wird über einen Wasserkreislauf weggekühlt und kann dem Entspannungsprozeß über Wärmetauscher wieder hinzugefügt werden.

Da der Generator mit der Turbinendrehzahl rotiert, ist eine direkte Einspeisung in das öffentliche Netz (50 Hz) nicht möglich. Der mittelfrequente Strom (je nach Generatortyp bis ca. 1100 Hz) wird in einem auf den Generator abgestimmten Umrichter zunächst gleichgerichtet und dann über einen Wechselrichter in das öffentliche 3 x 400 V, 50 Hz Netz eingespeist. Die Umrichter sind schaltungsgemäß so konzipiert, daß der Oberwellengehalt der netzseitigen Ströme den Anforderungen der Energieversorgungs-Unternehmen entspricht. Bei größeren Leistungen bietet sich die Einspeisung der Energie über einen entsprechenden Trafo in das Mittelspannungsnetz (z.B. 10 kV).

Im folgenden wird unter Bezugnahme auf die Zeichnungen ein Ausführungsbeispiel der Erfindung näher erläutert.

Es zeigen:
- Fig. 1: ein Blockschaltbild der Erdgas-Expansionsanlage und
- Fig. 2: einen schematischen Schnitt durch einen der Turbogeneratoren.

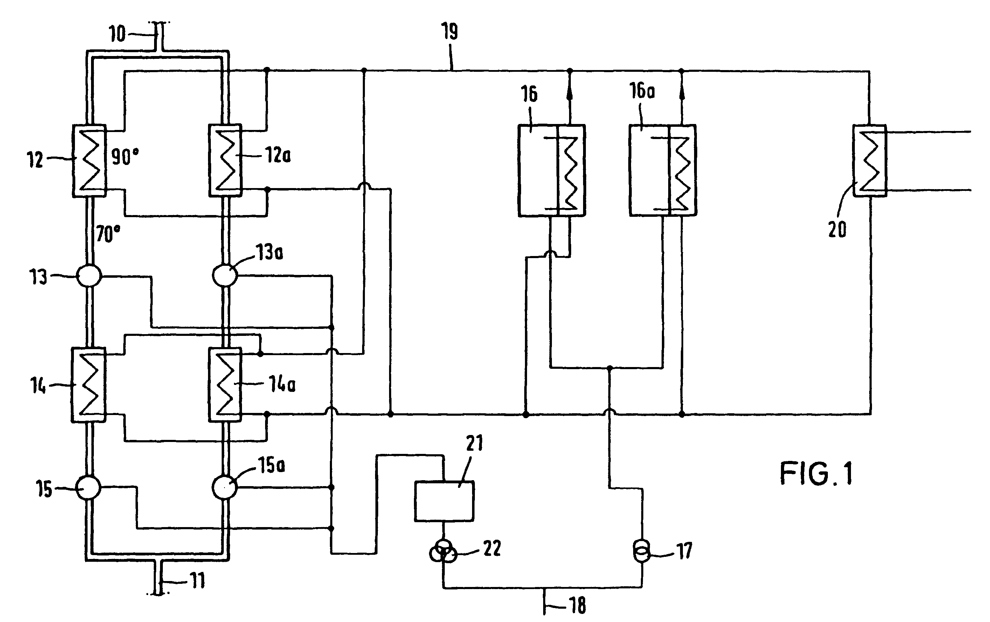

Der in Fig. 1 dargestellten Erdgas-Expansionsanlage wird das Erdgas durch eine Hochdruckleitung 10 zugeführt, in der der Druck z.B. 55 bar beträgt, bei einer Temperatur von 5 bis 10 °C. Die aus der Expansionsanlage herausführende Niederdruckleitung 11 ist an das Erdgas-Versorgungsnetz angeschlossen, in dem ein Druck von etwa 9 bar bei einer Temperatur von 5 bis 10 °C herrscht.

Das Erdgas strömt von der Hochdruckleitung 10 durch einen Wärmetauscher 12, in dem es auf eine unter 100 °C liegende Temperatur erwärmt wird, z.B. auf 70 °C, und danach durch einen Turbogenerator 13, in dem eine Entspannung auf etwa 22 bar erfolgt. Dem Turbogenerator 13 sind ein weiterer Wärmetauscher 14 und ein weiterer Turbogenerator 15 nachgeschaltet. Der Auslaß des Turbogenerators 15 ist mit der Niederdruckleitung 11 verbunden.

Die Reihenschaltung aus dem Wärmetauscher 12, dem Turbogenerator 13, dem Wärmetauscher 14 und dem Turbogenerator 15 kann einer Reihenschaltung aus den gleichen Komponenten parallelgeschaltet sein, wobei jeweils der Buchstabe "a" hinzugefügt ist. Diese beiden Parallelzweige sind zwischen die Hochdruckleitung 10 und die Niederdruckleitung 11 geschaltet.

Die Wärmetauscher 12,12a und 14,14a werden von einer Parallelschaltung aus mehreren Blockheizkraftwerken 16,16a mit Wärmeenergie versorgt. Sämtliche Wärmetauscher 12,12a,14,14a sind unmittelbar an die Parallelschaltung der Blockheizkraftwerke angeschlossen, so daß sämtliche Wärmetauscher eine Parallelschaltung bilden. Die Blockheizkraftwerke bilden mit sämtlichen Wärmetauschern einen geschlossenen Wärmeübertragungskreislauf 19, in dem z.B. Wasser als Wärmeübertragungsmedium zirkuliert.

Jedes Blockheizkraftwerk besteht aus einem Gasmotor, der mit dem der Niederdruckleitung 11 entnommenen Erdgas betrieben wird, und einem von dem Gasmotor angetriebenen Generator, der Strom erzeugt. Die Ausgangsleitungen der Generatoren werden über eine Transformatorenstation 17 auf die Netzspannung transformiert und dann in das elektrische Versorgungsnetz 18 eingespeist. Die Gasmotore treiben die Generatoren mit einer solchen geregelten Geschwindigkeit an, daß die Wechselspannung mit der Netzfrequenz und in Phase mit dem Versorgungsnetz erzeugt wird.

Für die notwendige Vorheizung des Erdgases werden Blockheizkraftwerk-Motoren mit Magerverbrennung eingesetzt. Die Magerverbrennung vermindert die Stickoxidentstehung durch innermotorische Maßnahmen gleich bei der Verbrennung. Die Abgassauberkeit kann ohne Hilfe von Katalysatoren nahe an die Werte von Anlagen mit 3-Wege-Katalysatoren herangebracht werden. Die Motor-Regelungselektronik stellt bestimmte Gasaufbereitungs- und Verbrennungsbedingungen ein, die im Dauerbetrieb stabil sind. Die Wirkungsgrade sind u.a. durch Gemischaufladung merklich höher.

Aus der eingesetzten Primärenergie Erdgas werden am Motor-Schwungrad 35,4 % mechanische Energie abgegeben. Der Generator wandelt die Antriebsenergie in 33,9 % elektrische Energie um, die ins örtliche Netz eingespeist wird. Die 61,7 % abzuführende Wärmeenergie aus dem Abgas, Motorkühlwasser und Schmieröl gelangt über Kühlwasser- und Abgaswärmeübertrager zu 57,3 % nutzbarer Wärmeenergie an die Heizungsanlage.

100 % Kraftstoff-Energie werden zu 33,9 % elektrischer und 57,3 % thermischer Energie umgewandelt. Dies ergibt den außerordentlich hohen Nutzungsgrad von 91,2 %. Lediglich 8,8 % sind Verluste.

Die Abwärme der Blockheizkraftwerke 16,16a, die von dem die Wärmetauscher 12,12a,14,14a enthaltenden Kreislauf 19 aufgenommen wird, wird teilweise zur Aufheizung des Erdgases benutzt. An den Kreislauf 19 ist ein weiterer Wärmetauscher 20 angeschlossen, der mit einem externen Energieverbraucher oder Energieerzeuger gekoppelt ist, beispielsweise mit der Rücklaufleitung eines Femwärmenetzes. Auf diese Weise kann Wärme, die von den Blockheizkraftwerken erzeugt worden ist und die von den Wärmetauschern 12,12a,14,14a nicht abgeführt wurde, in das Femwärmenetz eingespeist oder einem anderen Verbraucher zugeführt werden.

Der von den Turbogeneratoren 13,13a,15,15a erzeugte Strom wird einem Frequenzumrichter 21 zugeführt, wo er auf Netzfrequenz gebracht wird. Anschließend erfolgt in einem Transformator 22 eine Transformation auf die Höhe der Netzspannung, bevor der Strom in das Versorgungsnetz 18 eingespeist wird. Sowohl bei der Wärmeerzeugung in den Blockheizkraftwerken, als auch bei der Expansion in den Turbogeneratoren entsteht somit Strom, der dem Versorgungsnetz zugeführt wird.

Der Kreislauf 19 nimmt die Abwärme der Blockheizkraftwerke 16,16a auf, d.h. die Abgaswärme und die Verlustwärme, und transportiert sie zu den jeweiligen Wärmetauschern. Das Wärmeübertragungsmedium (Wasser) hat z.B. eine Vorlauftemperatur von etwas unter 100 °C, so daß die Temperatur in den Wärmetauschern etwa 90 °C beträgt, wodurch das Erdgas auf jeweils etwa 70 °C aufgeheizt wird.

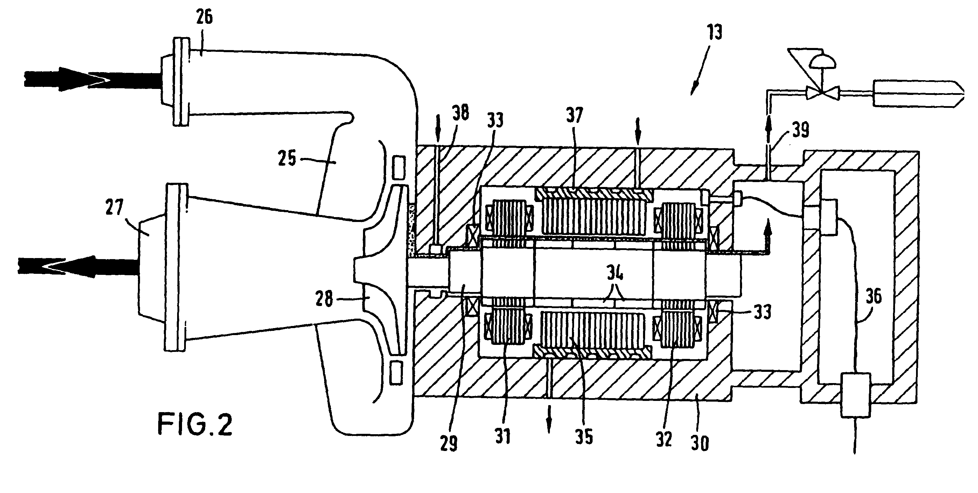

Fig. 2 zeigt schematisch den Aufbau des Turbogenerators 13, in dem die Expansion des Erdgases erfolgt. Die übrigen Turbogeneratoren sind in gleicher Weise ausgebildet.

Der Turbogenerator 13 weist eine Expansionsturbine 25 mit einem radialen Einlaß 26 und einem axialen Auslaß 27 auf. In der Turbine 25 ist das Turbinenrad 28 drehbar gelagert, das von dem unter hohem Druck (55 bar) stehenden Erdgas radial angeströmt und dadurch in Drehung versetzt wird. Das Turbinenrad 28 ist an einer Welle 29 befestigt, die in dem Generatorgehäuse 30 gelagert ist. Das Generatorgehäuse 30 schließt sich unmittelbar an das Turbinengehäuse an und die Welle 29 ragt aus dem Generatorgehäuse 30 in das Turbinengehäuse hinein. Das Generatorgehäuse 30 ist mit Ausnahme der in das Turbinengehäuse führenden Wellendurchführung vollständig gekapselt, d.h. die Welle 29 ist nur zum Turbinengehäuse hin aus dem Generatorgehäuse 30 herausgeführt. Die Welle 29 ist in Magnetlagern 31,32,33 gelagert, wobei die Magnetlager 31 und 32 Radiallager und das Magnetlager 33 ein Axiallager ist. Die Magnetlager halten die rotierende Welle 29 magnetisch in der Schwebe, so daß die Welle berührungsfrei gelagert ist. Ferner sind Fanglager vorgesehen, die bei nicht-erregten Magnetlagern die Welle 29 abstützen. Die Position der Welle 29 wird von (nicht dargestellten) Sensoren überwacht, die ringförmig angeordnet sind. Für jedes Magnetlager ist ein eigener ringförmiger Sensor vorhanden. Die Signale der Sensoren werden in separaten Regelkreisen verarbeitet, um die Magnetlager zu steuern.

Auf der Welle 29 des Rotors sind Permanentmagnete 34 befestigt, die den Rotor des Synchrongenerators bilden. Der Stator besteht aus lamellierten Elektroblechen und im Gehäuse 30 befestigten Generatorwicklungen 35, die über Kabel 36 mit dem Frequenzumsetzer 21 (Fig. 1) verbunden sind. Die Kühlung des Stators erfolgt durch Kühlkanäle 37, die von Kühlwasser durchströmt sind.

Das Innere des Gehäuses 30 wird hier mit Gas gekühlt, das über den Leckspalt der Welle 29 dem Turbinengehäuse entnommen wird. Zusätzlich kann durch einen Gaseinlaß 38 externes Kühlgas in das Gehäuse 30 eingeleitet werden. Das Gas strömt durch die Ringspalte der Axiallager 31 und 33 sowie am Rotor entlang und wird am entgegengesetzten Gehäuseende durch einen Kühlauslaß 39 abgeführt.

Da in dem Gehäuse 30 keine bewegten Teil vorhanden sind, die Reibung mit anderen Komponenten haben, wird kein Abrieb erzeugt, so daß keine Fremdstoffartikel in das Turbinengehäuse eindringen können. Der Turbogenerator 13 ist druckdicht ausgeführt, so daß selbst im Falle eines sekundären Schnellschlusses (am Auslaß 27) kein Erdgas in die Atmosphäre entweicht. Die Lagerung der Welle 29 ist schmierstofffrei. Die Verlustleistung des Turbogenerators besteht im wesentlichen aus den Gasreibungsverlusten und den Ohmschen Verlusten sowie den Wirbelstromverlusten. Die Verlustwärme wird in das Erdgas zurückgeführt.

## Patentansprüche

1. Erdgas-Expansionsanlage mit einem Wärmetauscher (12) zum Vorwärmen des unter hohem Druck stehenden Erdgases, einem Turbogenerator (13) zum Entspannen des Erdgases auf einen niedrigeren Druck und zur Stromerzeugung aus der dabei freiwerdenden Energie und mit einem Kraftwerk, das mit seiner Abwärme den Wärmetauscher (12) speist,
**dadurch gekennzeichnet,**
daß das Kraftwerk aus mehreren Blockheizkraftwerken (16,16a) mit jeweils einem Gas-Verbrennungsmotor und einem Generator besteht, die einzeln entweder ausgeschaltet oder mit Vollast im Digitalbetrieb betrieben sind, daß der Abwärmekreislauf (19) der Blockheizkraftwerke (16,16a) thermisch mit einem externen Energieverbraucher oder Energieerzeuger gekoppelt ist, um die beim Digitalbetrieb der Blockheizkraftwerke ohne externe Kühlungsmaßnahmen anfallende Rest-Wärememenge abzuführen, daß der Turbogenerator (13) eine in Magnetlagern (31,32,33) berührungsfrei gelagerte Welle (29) und ein geschlossenes druckdichtes Generatorgehäuse (30) aufweist, wobei zwischen der Welle (29) und dem Generatorgehäuse (30) ein Leckspalt vorhanden ist, durch den Gas aus dem Turbinengehäuse in das Generatorgehäuse strömt, aus dem es durch einen Kühlauslaß abgeführt wird.

2. Erdgas-Expansionsanlage nach Anspruch 1, dadurch gekennzeichnet, daß die Erwärmung des Erdgases im Wärmetauscher (12) auf unter 100 °C erfolgt.

3. Erdgas-Expansionsanlage nach Anspruch 1 oder 2,
dadurch gekennzeichnet, daß zwei Turbogeneratoren (13,15) hintereinandergeschaltet sind und jedem dieser Turbogeneratoren ein Wärmetauscher (12,14) vorgeschaltet ist.

4. Erdgas-Expansionsanlage nach einem der Ansprüche 1 bis 3, dadurch gekennzeichnet, daß die Blockheitzkraftwerke (16, 16a) parallel zueinander über einen Warmwasserkreis mehrere Expanderstränge parallel zueinander gegenseitig redundant beheizen.

## Claims

1. A natural gas expansion plant comprising a heat exchanger (12) for preheating the highly pressurized natural gas, a turbo generator (13) for expanding the natural gas to reach a lower pressure and for generating power from the energy released during said expansion, and comprising a power station having its waste heat supplied to the heat exchanger (12),
**characterized in**
that said power station comprises a plurality of block-type thermal power stations (16,16a) with respectively a gas-fired internal combustion engine and a generator, which individually are digitally operated, either switched off or in full-load operation, that the waste heat circuit (19) of the block-type thermal power stations (16,16a) is thermally coupled to an external energy consumer or energy generator to discharge the amount of waste heat produced during the digital operation of the block-type thermal power stations without external cooling measures, that the turbo generator (13) comprises a shaft (29) supported in a contactless manner by magnetic bearings (31,32,33), and a closed pressure-tight generator casing (30), a leakage gap being provided between the shaft (29) and the generator casing (30) for gas flow from the turbine housing into the generator housing, with the gas being discharged from the generator housing via a cooling outlet.

2. The natural gas expansion plant according to claim 1, characterized in that the heating of the natural gas in the heat exchanger (12) is performed to a temperature below 100°C.

3. The natural gas expansion plant according to claim 1 or 2, characterized in that two turbo generators (13,15) are connected in series to each other and each of said turbo generators has a respective heat exchanger (12,14) connected at its upstream side.

4. The natural gas expansion plant according to any one of claims 1 to 3, characterized in that the block-type thermal power stations (16,16a) are provided to heat, in parallel to each other and via a hot-water circuit, a plurality of expander conduits in parallel and in mutual redundancy.

## Revendications

1. Installation de détente du gaz naturel comprenant un échangeur de chaleur (12) pour le préchauffage du gaz naturel soumis à haute pression, un turbogénérateur (13) pour la détente du gaz naturel à une pression plus faible et pour la production de courant à partir de l'énergie libérée à cet effet et une centrale dont les pertes de chaleur alimentent l'échangeur de chaleur (12), caractérisée en ce que la centrale se compose de plusieurs unités de chauffage (16, 16a) comprenant chacune un moteur à combustion interne à gaz et un générateur, lesquelles individuellement soit sont arrêtées soit fonctionnent à plein régime en fonctionnement numérique, en ce que le circuit des pertes de chaleur (19) des unités de chauffage (16, 16a) est couplé sur le plan thermique avec un dispositif externe de consommation d'énergie ou de production d'énergie, permettant d'évacuer, sans recourir à des agents de refroidissement externes, les quantités de chaleur résiduelles qui se produisent lors du fonctionnement numérique des unités de chauffage, en ce que le turbogénérateur (13) comprend un arbre (29) logé sans contact dans des paliers magnétiques (31, 32, 33) et un carter du générateur (30) étanche à la pression et fermé, une fente de fuite étant prévue entre l'arbre (29) et le carter du générateur (30), à travers laquelle s'écoule du gaz depuis le carter de la turbine dans le carter du générateur, duquel il est évacué à travers une sortie de refroidissement.

2. Installation de détente du gaz naturel selon la revendication 1, caractérisée en ce que le gaz naturel est chauffé dans l'échangeur de chaleur (12) à une température inférieure à 100°C.

3. Installation de détente du gaz naturel selon la revendication 1 ou 2, caractérisée en ce que deux turbogénérateurs (13, 15) sont montés l'un derrière l'autre et un échangeur de chaleur (12, 14) est monté en amont de chacun de ces turbogénérateurs.

4. Installation de détente du gaz naturel selon l'une quelconque des revendications 1 à 3, caractérisée en ce que les unités de chauffage (16, 16a), montées en parallèle, chauffent par l'intermédiaire d'un circuit d'eau chaude plusieurs conduites de détente, montées en parallèle et de manière réciproquement redondante.
